# EUROPEAN PATENT SPECIFICATION

(11) **EP 3 045 992 B1**
(45) Date of publication and mention of the grant of the patent: **14.10.2020**
(21) Application number: 15151145.8
(22) Date of filing: 14.01.2015
(51) Int. Cl.: G05B 19/4093, G05B 19/418

(54) **Compensating for errors occurring in a production process**
Kompensation von Fehlern in einem Herstellungsprozess
Compensation d'erreurs se produisant dans un processus de production

(43) Date of publication of application: 20.07.2016
(73) Proprietor: Hexagon Technology Center GmbH, 9435 Heerbrugg (CH)
(72) Inventor: Pettersson, Bo, 1225 Luxembourg (LU); Siercks, Knut, 9402 Mörschwil (CH)
(74) Representative: Kaminski Harmann

(56) References cited:
- US-A1- 2012 215 341
- US-A1- 2013 268 110

## Description

The present invention pertains to the field of quality assurance for production processes. More specifically, the present invention relates to a system and a method for controlling a production facility based on measurements of samples of the output of a production process, the output being defined by nominal data, the nominal data comprising a CAD model, and for compensating systematic errors occurring in the production process.

It is common practice during the industrial production of goods such as a car to measure features and properties of its different components. These measurements can be carried out in special measurement cells by means of either contact or non contact measuring gauges, for example based on laser or photogrammetric principles. Such a procedure, for instance, is disclosed in DE 195 44 240 A1.

US 2012/0215341 A1 discloses a system for compensating dimensional accuracy of a CNC machine. After machining a feature into a part, a dimension of the part is measured. A compensation processor of the system calculates, based on the measured dimension, a plurality of CNC offsets, and provides the offsets to the CNC machining system.

US 2013/0268110 A1 discloses a machining error calculation method and apparatus, wherein an estimated value of the machining error may be computed through simulation.

US 7,672,500 discloses a method for monitoring and visualizing the output of a production process, whose output materials or items are inspected by one or more inspection units. The inspection units scan or otherwise inspect each of a series of items or material being produced by a production process, and an image is generated representing each of the inspected items, wherein differences between the items can be visually coded.

The purpose of such methods is to determine possible errors of the measured object during product development, launch or during production. Disadvantageously though, in the measurement process, there can occur various additional errors, that prevent or complicate the determination of the errors of the object. This is especially the case if a high precision detection of errors is needed.

The quantities produced in the controlled production process can lie in a range between one piece production and mass production. The parts are produced in a production facility which can incorporate a broad scale of different manufacturing techniques and technologies. Depending on the specific manufacturing technique the installation set-up of the facility can vary. For example, the production facility can comprise a CNC machine - including programming means as well as electronic controller means - if the parts are to be produced by milling or turning.

The parts to be produced are specified by nominal data in a drawing and/or a CAD model that defines theoretical dimensions of the part in combination with appropriate tolerances. The tolerances define the accepted deviations between the specified theoretical dimensions of the nominal data and the real dimensions of a produced part.

The manufacturing processes referred to also include a quality control step wherein measures are taken to ensure the desired quality of the produced parts, i.e. to ensure that the percentage of "good parts" does not fall below a defined minimum. The quality control step consists of two sub-steps:
- a measurement step to detect the quality of the produced parts by measuring appropriate quantities with an appropriate measurement facility; and
- a correction step to improve the production quality in case that the results of the measurement step show unsatisfying values (e. g. not enough "good parts").

Today, in manufacturing processes of the kind described above, the measurement facility that detects the quality of the produced parts can be e. g. a coordinate measurement machine or an articulated arm (e. g. a measuring roboter arm) . With this measurement equipment the "good parts" are detected by measuring one or more defined part dimensions (measurement step) .

If the measurements show that the deviations between the measured part dimensions and the theoretical values defined in the nominal data exceed the accepted tolerances, appropriate parameter values of the production facility are amended to compensate these production errors. In the above example of a CNC machine this could be the case e. g. if a milling tool changes its characteristics due to wear.

This parameter value amendment, however, has the strong disadvantage that it needs good knowledge about the general installation set-up of the facility, the current constitution of the facility and about the cause of the production errors. This requires highly skilled personal, and moreover - since the production error causes often are not exactly known - in many cases a try-and-error approach has to be performed which is time consuming and costly.

Therefore, a possibility to compensate the production errors without changing the parameter values of the production facility - i.e. wherein the production facility can be treated as a "black box" - would be highly advantageous.

It is therefore an object of the present invention to provide an improved method and an improved system for controlling a production process of an object in a production facility.

It is a particular object to provide such a method and such a system wherein no amendments in the production facility are necessary.

It is a further object to provide such a method and such a system wherein an intensity of the quality control is adaptable to an output of the production process.

It is a further object to provide an error compensation unit as a part of a system for controlling a production process for compensating errors in a production process without having to perform amendments in the production facility.

At least one of these objects is achieved by the method for controlling a production process of an object in a production assembly according to claim 1, the manufacturing system according to claim 7, the measurement facility according to claim 10, the error compensation unit according to claim 12, and/or the dependent claims of the present invention.

A first aspect of the invention relates to a method for controlling a production process of an object in a production assembly and for compensating errors occurring in the production process, the method comprising providing a production model that is based on nominal data of the object to a production control unit of a production facility of the production assembly, wherein the nominal data comprises a CAD model, and the production control unit interprets the production model into steering commands for the production facility to produce one or more objects. The method further comprises generating actual property data comprising obtained values of properties of at least one sample object produced in the production assembly according to a production model, performing a nominal-actual value comparison with the obtained values of properties of the actual property data and set values of corresponding properties of nominal property data of the object, thereby generating deviation data describing deviations between the obtained values and the corresponding set values and/or between the obtained values and corresponding production values of the production model, and automatically creating an adapted production model based on the nominal property data and on the deviation data and based on information about available processing means of the production assembly and about an adjustability of the processing means. Creating the adapted production model comprises adapting at least one set value or production value based on nominal property data and deviation data of the respective property of the object. The adapted production model is useable in an adapted production process for producing an adapted object in the production assembly and differs from the nominal property data. The adapted values are amended with respect to the set values or production values in such a way that an adapted object produced in the production assembly according to the adapted production model has smaller deviations with respect to the nominal property data than the at least one object.

In one embodiment of the method according to the invention, generating the actual property data comprises measuring properties of at least one sample object in a measurement facility, wherein the object has been produced in the production assembly according to the production model.

In another embodiment of the method according to the invention, generating the actual property data comprises predictably calculating properties of an object virtually produced in the production assembly according to the production model and according to a provided production facility model.

In another embodiment, the production model is amended with respect to the nominal property data, and/or the method comprises amending the production model, wherein the amendment is based on information about the production assembly, particularly on information about known systematic errors.

In yet another embodiment, creating the adapted production model is also based on the production model.

In a further embodiment, the nominal property data comprises threshold values for the set values, each threshold value describing a maximum allowable deviation from the respective set value, wherein the adapted production model comprises adapted control commands that are adapted for producing in the production assembly an adapted object having at least one adapted value of a property, the respective obtained value of which exceeds a respective threshold value, and wherein the at least one adapted value deviates from the respective set value in such a way that a deviation between the set value and the corresponding obtained value is at least partially compensated when producing the adapted object.

In one embodiment, the method according to the invention comprises
- providing the adapted production model to the production assembly,
- producing one or more adapted objects in the production assembly based on the adapted production model,
- generating adapted actual property data comprising values of properties of at least one adapted sample object produced in the production assembly according to the adapted production model,
- performing a nominal-actual value comparison with the values of properties of the adapted actual property data and set values of corresponding properties of the nominal property data, particularly describing deviations between the values of the adapted actual property data and the set values and/or between the values of the adapted actual property data and corresponding adapted production values of the adapted production model,
- generating adapted deviation data describing deviations between the values of the adapted actual property data and the set values, and
- automatically creating a further adapted production model based on the nominal property data and on the adapted deviation data.

In one embodiment, this method comprises
- selecting the at least one adapted sample object from a plurality of objects that have been produced in the production assembly according to the adapted production model, and/or
- measuring in a measurement facility properties of at least one adapted sample object that has been produced in the production assembly according to the adapted production model,
   wherein the selecting and/or measuring are subject to a statistical process control step comprising monitoring the measurement results, and comprising
- analyzing the measurement results with respect to changes over time,
- analyzing a statistical distribution of the measurement results,
- monitoring ambient and production assembly parameters and determining correlations between these, and/or
- monitoring ambient and/or production assembly parameters and determining correlations between the measurement results and at least one of these parameters,

Particularly, the method comprises adapting a measurement programme of the measurement facility based on the monitored measurement results, on the currently monitored ambient and/or production assembly parameters and/or on the identified correlations, and/or analyzing the statistical distribution comprises analyzing mean value, standard deviation, kind of statistical distribution function, number and distribution of outlier values, stability and/or trends.

In particular, the ambient and/or production assembly parameters comprise room temperature, machine temperatures at relevant positions, air humidity and barometric pressure, vibrations of the basement and/or the machines, noise level, brightness of illumination, time of day, day of week, calendar date, number and/or identity of persons currently working at the production assembly, machine hours since last maintenance or tool change, kind of last maintenance, storing time and conditions of the at least one sample object, current batch number and total number of the production lot, and/or processed materials.

A second aspect of the invention relates to a self-compensating manufacturing system adapted to produce at least one object in a production assembly, the production assembly comprising a production facility having at least one processing means and being adapted to produce the object, and a production control unit having means for storing and/or obtaining a production model and being adapted to control a production process of the production facility based on the production model. According to the invention, the manufacturing system comprises an error compensation unit for compensating errors in the production process of an object, wherein the production control unit is configured to interpret a production model that is based on nominal data of the object into steering commands for the production facility to produce one or more objects, the nominal data comprising a CAD model, the error compensation unit being adapted
- to obtain nominal property data of the object and deviation data that has been generated in the course of a nominal-actual value comparison with obtained values of properties of actual property data of at least one sample object and set values of corresponding properties of the nominal property data, the deviation data describing deviations between the obtained values and the corresponding set values and/or deviations between the obtained values and corresponding production values of the production model,
- to automatically create an adapted production model based on the nominal property data and on the deviation data and based on information about the at least one processing means and about an adjustability of the processing means, wherein creating the adapted production model comprises adapting at least one set value or production value based on nominal property data and deviation data of the respective property of the object, and
- to provide the adapted production model to the production control unit for an adapted production process of an adapted object,
   wherein the adapted values are amended with respect to the set values or production values in such a way that an adapted object produced in the production assembly according to the adapted production model has smaller deviations with respect to the nominal property data than the at least one object.

In one embodiment, the manufacturing system according to the invention comprises a measurement facility that is adapted to generate the actual property data by measuring values of properties of at least one sample object that has been produced in the production assembly according to the production model, and a quality assurance facility that is adapted to perform the nominal-actual value comparison with the measured values and corresponding set values and to generate deviation data describing deviations between the measured values and the corresponding set values.

In one embodiment, the measurement facility comprises a coordinate measuring machine, an articulated arm, a laser scanner, a structured light measurement device, a coating or lamination thickness measurement device, a weighing device, a hardness measuring device, a temperature measuring device, and/or a device for measuring voltage, electric current, electric resistance and/or dielectric strength.

In another embodiment, the production facility comprises an additive manufacturing machine, a CNC machine, a pressing machine, a rolling machine, a wire and/or plate bending machine, a grinding, sanding and/or polishing machine, and/or a welding machine.

In a further embodiment, the processing means comprises at least one tool providing a 3D printing, drilling, turning, milling, cutting, honing, sanding, grinding, polishing, pressing, rolling, bending and/or welding functionality.

In another embodiment, the manufacturing system comprises a production error predicting means adapted to generate the actual property data by predictably calculating values of properties of an object virtually produced according to the production model and according to a provided production facility model of the production facility, to perform the nominal-actual value comparison with the calculated values and set values of corresponding properties of the nominal property data, and to generate deviation data describing deviations between the calculated values and the corresponding set values.

In particular, the provided production facility model comprises a geometry and/or stiffness model of at least one part of the production facility comprising geometric and/or stiffness data applicable for predicting production errors of an object virtually produced in the production facility, and/or the production facility comprises internal measurement means adapted for measuring properties of at least a part of the production facility, wherein the provided production facility model is based on the measured properties of the production facility.

A third aspect of the invention relates to a measurement facility for measuring values of properties of at least one object that is produced in a production facility according to a production model, wherein the production model is based on nominal property data comprising a computer-aided design model, and the production facility comprises a production control unit configured to interpret the production model into steering commands for the production facility to produce the at least one object. The measurement facility is adapted to perform a nominal-actual value comparison with the measured values and set values of corresponding properties of the nominal property data of the object, thereby generating deviation data. According to the invention, the measurement facility comprises an error compensation unit for compensating errors occurring in the production process of the object, the error compensation unit being adapted to automatically create an adapted production model based on the nominal property data and on the deviation data, wherein the adapted production model is useable in an adapted production process for producing an adapted object in the production assembly, and differs from the nominal property data. The adapted values are amended with respect to the set values or production values in such a way that an adapted object produced in the production assembly according to the adapted production model has smaller deviations with respect to the nominal property data than the at least one object.

In one embodiment, the measurement facility comprises a coordinate measuring machine, an articulated arm, a laser scanner, a structured light measurement device, a coating or lamination thickness measurement device, a weighing device, a hardness measuring device, a temperature measuring device, and/or a device for measuring voltage, electric current, electric resistance and/or dielectric strength.

In another embodiment of the measurement facility according to the invention, the measured properties comprise linear or angular dimensions, lengths, distances, radii, diameter, position and/or orientation, curvature, thickness, volume, weight, roughness, hardness, surface quality parameters, optical, thermal and/or electrical properties.

In yet another embodiment, the measurement facility is adapted for use with a manufacturing system according to the invention.

In a further embodiment, the measurement facility according to the invention comprises a statistical process control unit having a computing means for performing a statistical process control step that comprises monitoring measurement results and analyzing the measurement results with respect to changes over time, analyzing a statistical distribution of the measurement results, monitoring ambient and production assembly parameters and determining correlations between these, and/or monitoring ambient and/or production assembly parameters and determining correlations between the measurement results and at least one of these parameters. The statistical process control step further comprises controlling the measuring of properties and/or a selecting of sample objects from a plurality of objects that have been produced in the production assembly, the controlling being based on the analyzed measurement results.

Particularly, the statistical process control unit is adapted to adapt a measurement programme of the measurement facility based on the monitored measurement results, on monitored ambient and/or production assembly parameters and/or on identified correlations, and/or analyzing the statistical distribution comprises analyzing mean value, standard deviation, kind of statistical distribution function, number and distribution of outlier values, stability and/or trends.

In particular, the ambient and/or production assembly parameters comprise room temperature, machine temperatures at relevant positions, air humidity and barometric pressure, vibrations of the basement and/or the machines, noise level, brightness of illumination, time of day, day of week, calendar date, number and/or identity of persons currently working at the production assembly, machine hours since last maintenance or tool change, kind of last maintenance, storage time and conditions of the at least one sample object, current batch number and total number of the production lot, and/or processed materials.

A fourth aspect of the invention relates to an error compensation unit for compensating errors in a production process of an object in a production assembly, being adapted for use in a manufacturing system according to the invention and/or being adapted for use with a measurement facility according to the invention, wherein a production facility of the production assembly comprises a production control unit configured to interpret a production model into steering commands for the production facility to produce the object, the production model being based on nominal property data comprising a CAD model. According to the invention, the error compensation unit comprises data obtaining means adapted to obtain nominal property data of the object and deviation data that has been generated in the course of a nominal-actual value comparison with obtained values of properties of actual property data of at least one sample object and set values of corresponding properties of the nominal property data, wherein the deviation data describes deviations between obtained values of properties of actual property data of at least one sample object and set values of corresponding properties of the nominal property data and/or between the obtained values and corresponding production values of a production model. The error compensation unit also comprises a data storage device adapted to store the nominal property data and the deviation data, a calculation device adapted to automatically create an adapted production model based on the nominal property data and on the deviation data and based on the information about available processing means and the adjustability of the processing means, wherein creating the adapted production model comprises adapting at least one set value or production value based on nominal property data and deviation data of the respective property of the object, and data provision means adapted to provide the adapted production model to the production assembly for an adapted production process of an adapted object, wherein the adapted production model comprises at least one adapted value of at least one property of the object and differs from the nominal property data. The adapted values are amended with respect to the set values or production values in such a way that an adapted object produced in the production assembly according to the adapted production model has smaller deviations with respect to the nominal property data than the at least one object. In one embodiment of the error compensation unit, the deviation data describes deviations between obtained values (e. g. measured or calculated values) of properties of actual property data of at least one sample object and set values of corresponding properties of the nominal property data and/or between the obtained values and corresponding production values of a production model.

In another embodiment, the data obtaining means is adapted to obtain information about machine parameters of the production assembly for performing the production process, particularly information about available processing means of the production assembly, and/or adjustability of the processing means, wherein the calculation device is adapted to create the adapted data set also based on the information about machine parameters of the production assembly.

In another embodiment, the error compensation unit comprises data output means, particularly a graphical display, adapted to provide the nominal property data, the deviation data, the adapted production model and/or graphical representations thereof to a user.

In yet another embodiment of the error compensation unit, the data obtaining means and the data provision means comprise a cable, means for allowing a wireless data transfer, or means for accepting a storage medium, in particular a compact disc or flash memory device.

The invention in the following will be described in detail by referring to exemplary embodiments that are accompanied by figures, in which:
- Fig. 1: shows a prior art manufacturing system with a monitoring operation of the production process;
- Fig. 2: shows an exemplary self-compensating manufacturing system according to the invention;
- Fig. 3: shows a flow-chart illustrating an exemplary embodiment of a method for monitoring a production process of an object according to the invention;
- Fig. 4: shows an exemplary error compensation unit for use in a production process of an object;
- Fig. 5: shows a prior art system and method for controlling a production process of an object;
- Fig. 6: shows a first exemplary embodiment of a system and method for controlling a production process of an object according to the invention;
- Fig. 7: illustrates a repetitive use of the system and method of the first embodiment;
- Fig. 8: shows a second exemplary embodiment of a system and method for controlling a production process of an object having a statistical process control; and
- Fig. 9: shows a third exemplary embodiment of a system and method for controlling a production process of an object according to the invention.

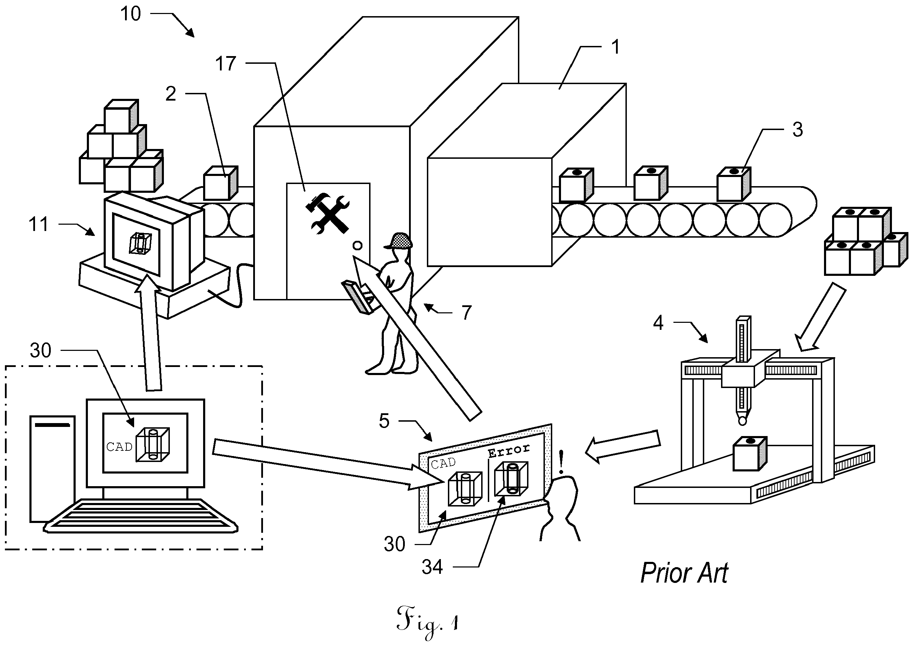

In Figure 1 a system as known from the prior art for controlling a production process of an object 3 is illustrated. For producing the object 3, nominal data from a CAD model 30 is provided to a steering unit 11 of a production assembly 10. The production assembly comprises a production facility 1, which is controlled by the steering unit 11 and comprises at least one tool for producing objects 3 from raw material 2. After the production of one or more objects 3 according to the CAD data 30 in the production facility 1, samples of the objects 3 are taken for reasons of quality assurance. These are then examined in a measurement facility 4, where certain properties of the samples are measured. As shown in this exemplary illustration, the measurement facility 4 can comprise a coordinate measuring machine, and the measurement may include measuring spatial coordinates of the sample. Measurement data comprising information about the measured properties is generated and provided to the quality assurance division 5. In the quality assurance division 5, the measured values of the properties are compared with set values of corresponding properties of the CAD data 30 of the produced objects 3, and deviations between the sample objects and the virtual objects of the CAD data 30 are determined.

If these deviations exceed a pre-defined threshold value (e. g. defined in the CAD data 30) actions are required to alter the production process in order to produce objects that meet the pre-defined threshold values. To achieve this aim, it is established practice to adjust the production assembly 10 accordingly. For instance, a production programme of the production control unit 11 can be amended or tools in the production facility 1 can be exchanged or altered. In the example of Figure 1, a drilled hole in the object 3 is too big compared to the CAD data 30. Thus, a drilling speed might be reduced in the production programme, or by means of maintenance 17 a smaller drill could be installed or the existing drill adapted. Disadvantageously, these amendments need skilled personal 7 in order to prevent damages to the expensive production assembly 10.

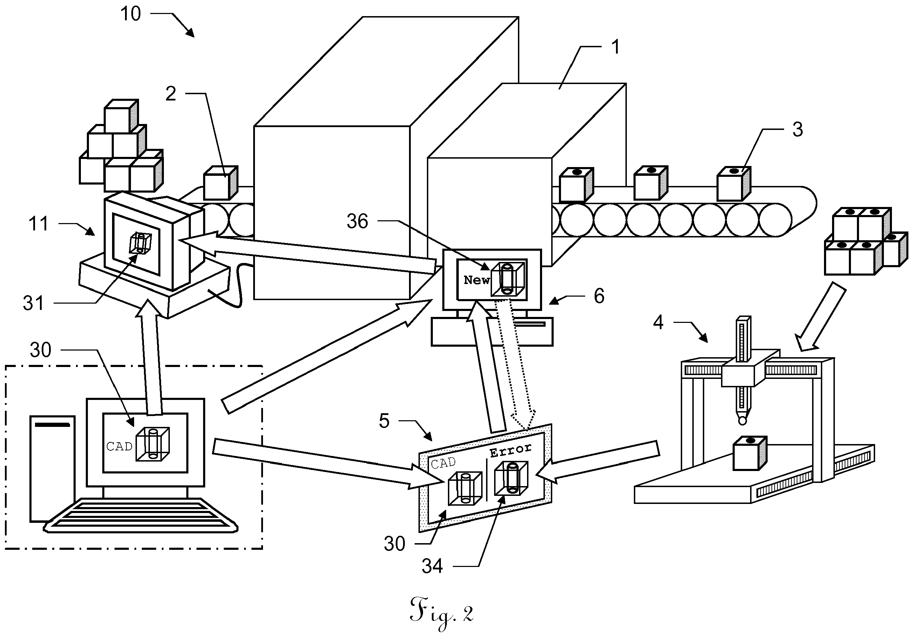

Figure 2 illustrates an exemplary system for controlling a production process of an object 3 according to the invention. In contrast to the system of Figure 1, advantageously no adjustment of the production assembly 10 and, thus, no especially skilled personal 7 are necessary. A production model 31 based on the nominal data 30 (e. g. CAD data) is provided to the production control unit 11 which controls the production of objects 3 in the production facility 1.

Properties of sample objects are measured in the measurement facility 4, and deviation data 34 is generated based on the determined deviations from the nominal data 30. This deviation data 34 is then provided to an error compensation unit 6. Based on the deviation data 34 and on the nominal data 30 - and optionally on information about the properties of the production facility 1 - an adapted production model 36 is generated by an algorithm of the error compensation unit 6 based on the production model. This adapted production model 36, which is adapted to compensate the measured deviations, is provided to the production control unit 11.

In the example of Figure 2, the error relates to the position of a drilled hole in the produced object 3.

In one example, the diameter of the drilled hole might be too big compared to the nominal data 30 and the original production model 31. Thus, in the adapted production model 36 the size of the drilled hole might be reduced with respect to the nominal data 30. The object is then produced according to the adapted production model 36, i.e. with a smaller hole than before. As there are no further adaptations in the production facility 1, one can expect that an object is produced having a drilled hole that is too big with respect to the adapted production model 36, but nevertheless meets the threshold values with respect to the original nominal data 30.

In another example, it is the position of the drilled hole that is not correct; e. g. the measured value of the X coordinate is too small compared to the nominal data 30. Thus, in the adapted production model 36 the position of the drilled hole might be amended with respect to the nominal data 30, e. g. increasing the value of the X coordinate, in order to obtain a drilled hole at the desired position when producing an adapted object according to the adapted production model 36.

Adaptation of the model takes place with the production phase already in progress. The adapted objects are intended for sale or further processing. The process can be an at least partially automated loop with the steps
- selecting samples from the production output,
- measuring properties of the samples,
- determining deviations, and
- compensation of the deviations.

These steps, and particularly the amendment of the CAD-data, can be controlled by predefined algorithms, so that no user interaction is necessary.

The adapted production model 36 is not intended to represent the part how it should be produced (i.e. is no nominal data). Instead, it represents an object that intentionally deviates from the nominal data 30 in order to compensate opposed deviations that occur during the production. As it is solely intended for this purpose, the adapted production model 36 need not comprise any thresholds or tolerance values. Further, it may be a volatile data set and need not be archived.

Optionally, values provided in the initial production model 31 can already deviate from the nominal data 30. For instance, if systematic errors of the production facility 1 are known beforehand, the affected values can already be amended, e. g. manually by a user, before producing the first part 3. In this case, the measured values optionally might as well be compared with the adapted values of the initial production model 31 instead of the original values of the nominal data 30.

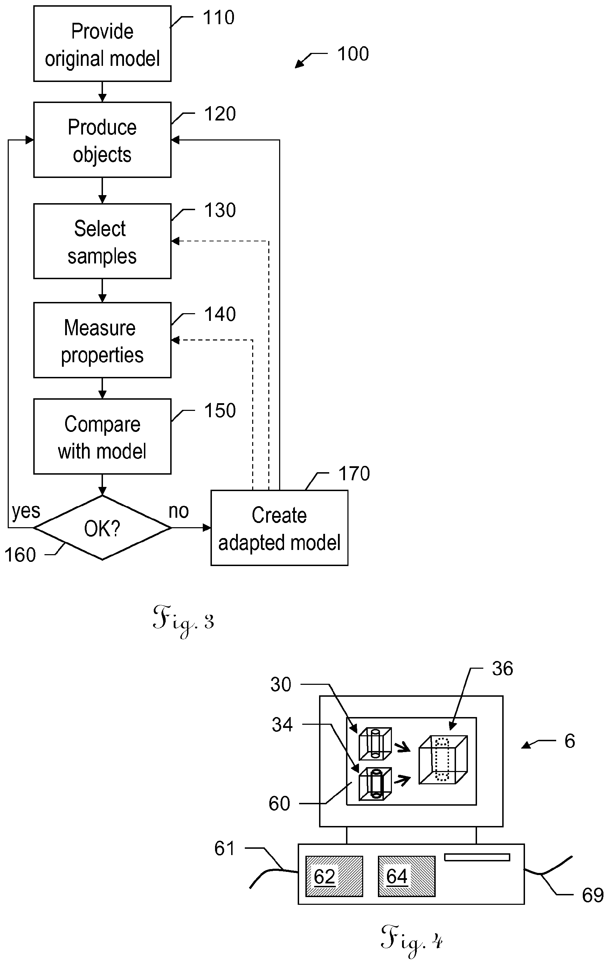

Figure 3 is a flow-chart illustrating a method 100 for monitoring a production process of an object according to the invention.

The method 100 starts with the provision 110 of model or nominal data of the objects that are to be produced, e. g. a CAD model of the object. Then, according to the provided model or nominal data, a number of objects (i.e. at least one object) are produced 120 in a production facility. A number of samples are selected 130 from the number of produced objects. Certain properties of the selected samples are measured 140 in a measurement facility, and the measured values are compared 150 with set values of the provided model or nominal data. Then, it is checked 160 whether the measured properties deviate from those of the nominal data more than a pre-defined threshold. If the samples are OK, production is continued without any changes. If the samples are not OK, i.e. if thresholds are exceeded for at least one measured value, according to the invention, for compensating the production errors, an adapted production model is created 170 and provided to the production assembly in order to produce adapted objects according to this adapted model. The adapted model does not provide nominal values of the properties that did not meet the defined thresholds. Instead, it is the purpose of the adapted model to provide false values for these properties in order to compensate errors of the production facility. Optionally, also the future selection 130 of samples can be influenced by the adapted model, as well as the measurement 140 of the samples (illustrated by the dashed arrows).

Figure 4 shows an exemplary embodiment of an error compensation unit 6 according to the invention. The error compensation unit 6 comprises means for obtaining the nominal data 30, the deviation data 34 and optionally further data, such as the last production model 31 or production facility data. Here, these means are depicted as a first cable 61. Obviously, the data can be obtained also by other means, for instance on a storage medium (compact disc, flash drive, USB stick etc.) or via a wireless connection (WiFi, Bluetooth etc.). The error compensation unit 6 furthermore comprises a data storage device 62 for storing the data and a calculation device 64 for creating adapted model data 36 based on the nominal data 30, the deviation data 34 and optionally further obtained data. The error compensation unit 6 also comprises means for providing the adapted model data 36 to a production assembly. Here, these means are depicted as a second cable 69. Obviously, the data can be provided also by other means (see above). In this embodiment, the error compensation unit 6 comprises a display 60 for informing a user about the deviations and the respective compensations. Optionally, the user is enabled to alter the compensations manually.

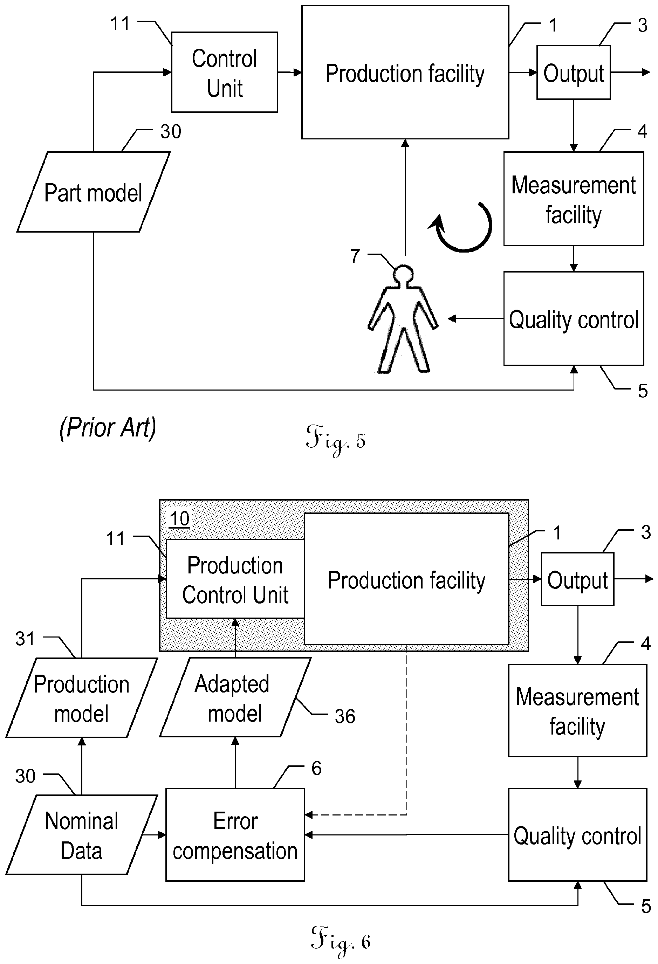

In Figure 5, a prior art system for controlling a production process of an object is depicted in a more abstract manner. As already described with respect to Figure 1, a production model 31 that is based on nominal data 30 (e. g. a CAD model) of an object is provided to the control unit 11 of a production facility 1. The production control unit 11 interprets the production model 31 into steering commands for the production facility 1. According to these steering commands, the production facility 1 produces a number of objects as output 3. Before shipping or further processing of the output 3, samples of the output 3 are measured in a measurement facility 4. The results of the measurements are provided to a quality control unit 5, where the compliance of pre-defined thresholds is monitored and, if thresholds are exceeded, appropriate actions are taken. These actions particularly comprise the assignment of skilled maintenance personnel 7 for unscheduled service and maintenance (e. g. a repair, exchange or set-up) of the production facility 1 or one or more tools of the production facility 1.

Figures 6 to 9 show three exemplary embodiments of a system for controlling a production process of an object according to the invention.

Figure 6 illustrates a first exemplary embodiment of the system. As already described with respect to Figure 2, nominal data 30 (e. g. originally provided as a CAD model) of an object is provided to the production control unit 11 of a production facility 1 in form of a production model 31. The production model 31 is interpretable by the production control unit 11 and comprises the necessary information about the nominally defined object 3 to produce the same.

The production facility 1 and production control unit 11 here are shown as parts of a production assembly 10, which can be regarded as a "black box", as according to the invention no amendments with respect to the production facility 1 are necessary. The production control unit 11 interprets the production model 31 into steering commands (e. g. CAM data) for the production facility 1. According to these steering commands, the production facility 1 produces a number of objects 3 as output. Before shipping or further processing of the output, samples of the output (i.e. at least one sample object) are measured in a measurement facility 4.

In the measurement facility 4 parameters of the sample objects are measured that are required to detect the quality of the produced output 3. These parameters particularly comprise geometrical part dimensions, such as lengths, distances, diameters, position coordinates, or thicknesses. For measuring these, the measurement facility 4 can comprise coordinate measuring machines (CMM), articulated arms, distance meters, optical measurement devices (e. g. transmitted light), image processing devices with cameras, devices for measuring thickness via electrical or ultrasonic parameters, mechanical gauges or standards, callipers etc. Furthermore, the parameters can comprise surface quality parameters, such as linear or angular dimensions, lengths, distances, radii, diameter, position and/or orientation, curvature, thickness, volume, weight, roughness, hardness, surface quality parameters, optical, thermal and/or electrical properties. Optionally, the measurement facility 4 can be integrated into the production assembly 10 (not shown here). For instance, CMM functionality can be physically integrated into a CNC production machine. This is advantageous because both types of machine have the need for positioning in three dimensions with high accuracy, so that synergies can be employed by fusing these two machines into one.

The results of the measurements are provided to a quality control unit 5, where the compliance of pre-defined thresholds provided by the nominal data 30 is monitored.

If the measured values are within the thresholds, i.e. if the measured sample objects are OK, the production process can continue without any amendments. If at least one threshold is exceeded, according to the invention, the data is provided to an error compensation unit 6, which creates an adapted model 36. The geometry and the dimensions of the adapted model 36 are based on the nominal data 30, and/or on the preceding production model 31, but its dimensions are changeable to a certain extent based on special error compensation values that are defined by the error compensation unit 6. Then, instead of the preceding production model 31, the model data of this new virtual part provided by the adapted production model 36 is used to program and/or control the production facility 1.

The error compensation values are defined in dependence of the production errors, i.e. the deviations 34 between the measured values of the properties (e. g. dimensions) of the produced parts 3 and the theoretical values of the nominal data 30.

The compensation values are defined in such a way that by applying them to the dimensions of the virtual part, the measured production errors are compensated without having to alter any of the parameters of the production facility 1 itself. If, for example, a measured length of a produced part 3 is too big compared to the nominal CAD model 30, the corresponding length of the virtual part is decreased, so that this production error will be compensated without changing anything in the production assembly 10 - which thus can be treated as a black box.

The definition of the error compensation values further depends on the definition of the tolerances of the original part as defined in the nominal data 30. This is important because it must be ensured that changing a dimension at one point of the part, i.e. where the deviations have been measured, does not lead to an unwanted dimensional change at another location of the part which could lead to exceeding tolerances there.

Additionally or alternatively, the error compensation values can be used to compensate the production errors on the level of the tool kinematics instead of on the model description level. Consequently, the error compensation values directly influence the production control unit 11 which control the production facility 1 (e. g. by a CAM program, "G-code"). For the example of a CNC machine that would mean that the error compensation values could alter the trace route of a milling tool.

Optionally, the error compensation values are defined not only in dependence of the measured deviations but additionally in dependence of relevant information about the production facility 1 (information flow represented by the dashed arrow). As described above, the error compensation values defined by the error compensation unit to adapt the geometry and dimensions of the adapted production model 36 are based on the deviations between the measured dimensions of produced parts 3 and the theoretical values of the nominal data 30.

However, in some situations the permitted changes of the dimensions of the adapted model 36 are not unlimited but restricted due to specific machine parameters of the production facility 1. An example for such a situation would be the diameter of a drilled hole which cannot vary continuously but might be limited to a discrete number of values, namely the diameters of the drill tools available in the production facility 1. If, for example, the theoretical diameter of the hole would be 10 mm and the produced parts show an actual diameter of 10.17 mm, then it will not be possible to reduce the theoretical value of the virtual part down to 9.83 mm, since there is no drill available with such a diameter. However, if there is a drill with a diameter of 9.8 mm, by using that drill, one could expect the resulting diameter to be about 9.97 mm, which then could meet a pre-defined threshold value for the 10 mm hole. Therefore, preferably, the error compensation unit 6 has access to all needed information about the production facility 1 which is relevant for choosing valid values for all changing dimensions of the virtual part - e. g. including information about all possible tool choices inside the production facility 1.

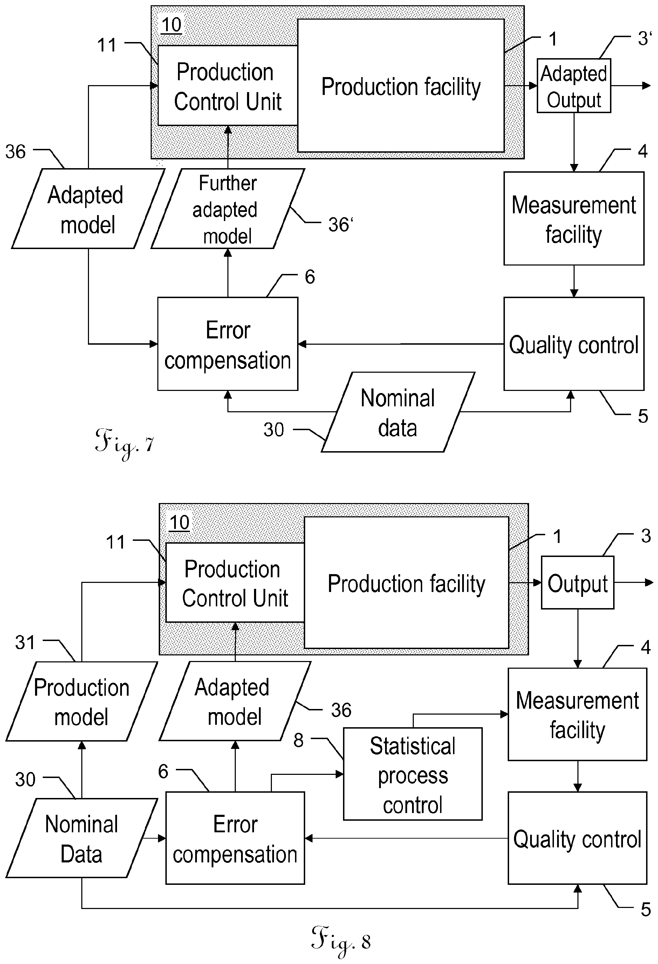

Figure 7 shows a second run of the system and method of Figure 6 for creating a further adapted production model 36'. The adapted production model 36 of Figure 6 is used for producing adapted parts 3', samples of which are again measured in the measurement facility 4. In the quality control step, the measured values are compared with values of corresponding properties of the nominal data 30. If the measured values meet the predefined thresholds, the first adaptation of the production model was successful and the production process can continue. If the predefined thresholds are still not met, based on the determined deviations, the nominal data 30 and the adapted production model 36, a further adapted production model 36' is created.

Figure 8 illustrates a second exemplary embodiment of the system. This embodiment comprises all the features of the first embodiment of Figure 6 and additionally comprises a statistical process control (SPC) unit 8.

According to this embodiment, the manufacturing process comprises a statistical process control step to optimize the efficiency of the quality control step by minimizing the time and effort needed to perform the measurement step. This comprises monitoring the measurement results and analysing them with respect to changes over time. Particularly, the statistical distribution of the results can be analyzed, e. g. mean value, standard deviation, kind of statistical distribution function (e. g. Gaussian distribution), number and distribution of outlier values, stability, trends etc.

The statistical process control step may furthermore comprise monitoring ambient and production assembly parameters and trying to identify correlations. The monitoring can comprise measuring and/or identifying room temperature, machine temperatures at relevant positions, air humidity and barometric pressure, vibrations of the basement and/or the machines, noise level, brightness of illumination, time of day, day of week, calendar date, number and/or identity of persons currently working at the production assembly, machine hours since last maintenance or tool change, kind of last maintenance, storage time and conditions of the at least one sample object, current batch number and/or total number of the production lot, processed materials (e. g. what kind of steel or aluminium is currently used, which alloy, heat treatment, supplier) etc. Then, possible correlations between changes in the behaviour of the measurement results and the monitored ambient and/or machine parameters can be determined.

The statistical process control step may furthermore comprise adapting or optimizing the measurement programme, i.e. trying to optimize the efficiency of the measurement programme based on the identified behaviour of the current measurement results, on the currently monitored ambient and/or machine parameters and on the identified correlations. For example, if a measurement value stays very stable over time and has been found not to be affected from any fluctuating ambient parameters, then the measurement frequency (how many parts of a mass production need to be measured) can possibly be reduced.

Optionally, the measurement programme of the measurement facility 4 can be adapted based on the changes between the nominal data 30 or the initial production data 31 and the adapted model 36. As described above, the measurement facility 4 is used to measure all the parameters (geometrical and others) of a produced part which are critical to identify the part as a "good part" or not. All these parameters are defined in a measurement programme, which furthermore defines the frequency of each measurement, i.e. how many parts out of a production lot have to be measured and which selection strategy is used (every part, random samples or every 10^{th} part etc.), the accuracy of each measurement, the measurement procedure (e. g. taking a mean value out of x single measurements) etc. For the definition of the measurement programme, information from the nominal data is used about which dimensions and/or other properties are critical for the quality of the produced parts. The defined measurement programme can then be adapted and thus optimized according to the adapted production model during the production process.

Optionally, a further quality control step can be performed using the SPC unit 8. According to the defined measurement programme, samples of the produced parts 3 are measured in the measurement facility 4. The measured actual values of the critical part dimensions and/or other measured properties are then compared to the theoretical dimensions defined in the nominal data 30.

Normally, the actual measured values and the theoretical values will be not exactly the same. Nevertheless, the produced part can be a "good part" as long as the deviations between these values stay below defined thresholds. The definition of these thresholds is also taken from the nominal data 30. Based on all determined deviations of all measured dimensions and other part parameters in comparison to the accepted values the produced part is treated as a "good part" or a "bad part". Furthermore, based on these results, the error compensation unit 6 defines error compensation values as described above. However, not only the part currently measured is taken into account but also formerly measured parts. The historical development of all the measured values is used to define the compensation values. For example, if only one part is identified as "bad" whereas all prior parts have been identified as "good", then the error compensation unit will probably not immediately change the parameters of the virtual part since this bad part is probably only a single outlier. Instead of immediately changing the virtual part, the measurement programme will be amended via the SPC unit 8 by increasing the measurement frequency.

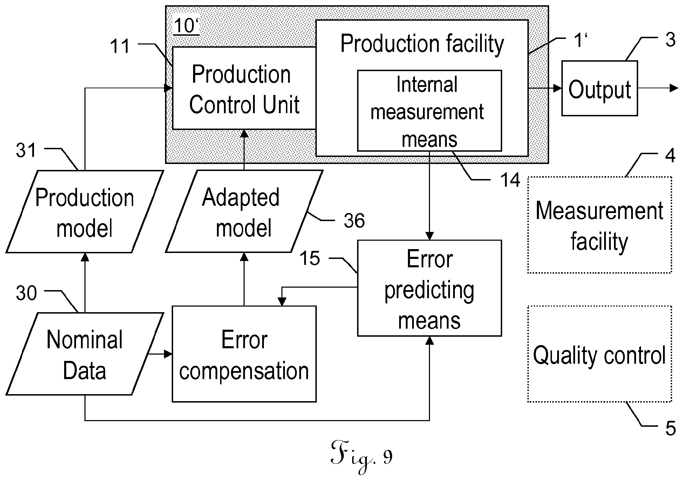

Figure 9 illustrates a third exemplary embodiment of the system. In the embodiments described so far, the error compensation values are defined in dependence of deviations between the measured dimensions of produced parts 3 and the theoretical values of the nominal data 30. Even though this is straightforward, there is still the disadvantage that "bad parts" need to be produced first, in order to detect that there is a need for correction. It would be advantageous to know if parts will be "bad" even before any parts are produced.

In the embodiment shown in Figure 9, the manufacturing process further comprises a part production simulation process, in the course of which the production of an object in the production facility according to the initial data set is simulated and properties of this virtually produced object are predictably calculated according to a provided production facility model.

For this part production simulation process, the manufacturing system is equipped with a production error predicting means 15 which is capable to predict reaction forces and displacements of the tools (and/or tool holders) of the production facility 1' in the simulated part production process.

At the initial state, a geometrical calibration model and/or a stiffness calibration model of the production facility 1' are provided to the error predicting means 15. This means that the errors of the production facility 1' are known, e. g. the pitch, yaw and roll errors of a tool of the production facility 1', and can thus directly be compensated by an adapted production model 36 even before producing the first sample part. The same applies to the position-dependent stiffness of a tool. As shown here, the production facility 1' optionally comprises an internal measurement means 14 which is adapted for measuring properties of at least a part of the production facility 1', e. g. certain tools. The provided production facility model is then based on values of the properties measured by the internal measurement means 14.

The production error predicting means 15 is adapted to predictably calculate properties of an object, as if this object would be produced in the production facility 1 according to the nominal data based production model 31 and according to a provided production facility model. This production facility model comprises a geometry model and/or a stiffness model of the production facility or parts thereof, particularly tools of the production facility. The geometry or stiffness model comprises geometric or stiffness data, respectively, applicable for predicting production errors of an object virtually produced in the production facility.

Furthermore, the production error predicting means 15 is adapted to determine deviations between the properties of the virtually produced object and the nominal data 30, to generate deviation data 34 describing these deviations, and to provide this deviation data 34 to the error compensation unit 6.

With the forces and displacements determined in the production facility 1' of Figure 9, the (non-infinite) stiffness of the production facility 1' can be determined and production errors can be predicted without a real production of any single part. Subsequently, the predicted production errors are used to define the compensation values which again are used to define the dimensions of the adapted production model 36.

As no real production takes place in the part production simulation process, the measurement facility 4 and the quality control 5 are not needed, until real objects 3' are produced according to the adapted model 36.

Although the invention is illustrated above, partly with reference to some preferred embodiments, it must be understood that numerous modifications and combinations of different features of the embodiments can be made. All of these modifications lie within the scope of the appended claims.

## Claims

1. Method (100) for controlling a production process of an object (3) in a production assembly (10) and for compensating errors occurring in the production process, the method comprising
• providing (110) a production model (31) that is based on nominal property data (30) of the object (3) to a production control unit (11) of a production facility (1) of the production assembly (10), wherein
▪ the nominal property data (30) comprises a computer-aided design model, and
▪ the production control unit (11) interprets the production model (31) into steering commands for the production facility (1) to produce (120) one or more objects (3);
• generating actual property data comprising obtained values of properties of at least one sample object produced in the production assembly (10) according to the production model (31);
• performing a nominal-actual value comparison (150) with the obtained values of properties of the actual property data and set values of corresponding properties of the nominal property data (30) of the object (3), thereby generating deviation data (34) describing deviations between the obtained values and the corresponding set values and/or deviations between the obtained values and corresponding production values of the production model (31); and
• automatically creating (170) an adapted production model (36) based on the nominal property data (30) and on the deviation data (34) and based on information about available processing means of the production assembly (10) and about an adjustability of the processing means,
wherein creating (170) the adapted production model (36) comprises adapting at least one set value or production value based on nominal property data (30) and deviation data (34) of the respective property of the object (3), wherein the adapted production model (36)
• comprises at least one adapted value of at least one property of the object (3);
• is useable in an adapted production process for producing an adapted object (3') in the production assembly (10); and
• differs from the nominal property data (30), wherein the adapted values are amended with respect to the set values or production values in such a way that the adapted object (3') produced in the production assembly (10) according to the adapted production model (36) has smaller deviations with respect to the nominal property data (30) than the object (3).

2. Method (100) according to claim 1,
**characterized in that**
generating the actual property data comprises measuring (140) in a measurement facility (4) properties of the at least one sample object that has been produced in the production assembly (10) according to the production model (30).

3. Method (100) according to claim 1,
**characterized in that**
generating the actual property data comprises predictably calculating properties of an object virtually produced in the production assembly (10) according to the production model (30) and according to a provided production facility model.

4. Method (100) according to any one of the preceding claims,
**characterized in that**
the nominal property data (30) comprises threshold values for the set values, each threshold value describing a maximum allowable deviation from the respective set value, wherein the at least one adapted value deviates from the respective set value in such a way that a deviation between the set value and the corresponding obtained value is at least partially compensated when producing the adapted object (3').

5. Method (100) according to any one of the preceding claims,
**characterized in that**
creating (170) the adapted production model (36) is based on the production model (31), wherein the production model (31) is amended with respect to the nominal property data (30), wherein the amendment is based on information about known systematic errors of the production assembly (10).

6. Method (100) according to any one of the preceding claims,
**characterized by**
• providing the adapted production model (36) to the production assembly (10);
• producing one or more adapted objects (3') in the production assembly (10) based on the adapted production model (36);
• generating adapted actual property data comprising values of properties of at least one adapted sample object produced in the production assembly (10) according to the adapted production model (36);
• performing a nominal-actual value comparison (150) with the values of properties of the adapted actual property data and set values of corresponding properties of the nominal property data (30), thereby generating adapted deviation data, particularly describing deviations
▪ between the values of the adapted actual property data and the set values and/or
▪ between the values of the adapted actual property data and corresponding adapted production values of the adapted production model (36); and
• automatically creating (170) a further adapted production model (36') based on the nominal property data (30) and on the adapted deviation data.

7. Self-compensating manufacturing system adapted to produce at least one object (3) in a production assembly (10), the production assembly (10) comprising
• a production facility (1) having at least one processing means and being adapted to produce the object (3),
• a production control unit (11) having means for storing and/or obtaining a production model (31) and being adapted to control a production process of the production facility (1) based on the production model (31), and
• an error compensation unit (6) for compensating errors in the production process of an object (3), wherein the production control unit (11) is configured to interpret the production model (31) that is based on nominal property data (30) of the object (3) into steering commands for the production facility (1) to produce one or more objects (3), the nominal property data (30) comprising a computer-aided design model, the error compensation unit (6) being adapted
• to obtain the nominal property data (30) of the object (3) and deviation data (34) that has been generated in the course of a nominal-actual value comparison (150) with obtained values of properties of actual property data of at least one sample object and set values of corresponding properties of the nominal property data (30), the deviation data (34) describing deviations between the obtained values and the corresponding set values and/or deviations between the obtained values and corresponding production values of the production model (31);
• to automatically create (170) an adapted production model (36) based on the nominal property data (30) and on the deviation data (34) and based on information about the at least one processing means and about an adjustability of the processing means, wherein creating (170) the adapted production model (36) comprises adapting at least one set value or production value based on nominal property data (30) and deviation data (34) of the respective property of the object (3); and
• to provide the adapted production model (36) to the production control unit (11) for an adapted production process of an adapted object (3'), wherein the adapted production model (36) comprises at least one adapted value of at least one property of the object (3), wherein the adapted values are amended with respect to the set values or production values in such a way that the adapted object (3') produced in the production assembly (10) according to the adapted production model (36) has smaller deviations with respect to the nominal property data (30) than the object (3).

8. Manufacturing system according to claim 7,
**characterized by**
• a measurement facility (4) that is adapted to generate the actual property data by measuring values of properties of the at least one sample object that has been produced in the production assembly (10) according to the production model (31); and
• a quality assurance facility (5) that is adapted to perform the nominal-actual value comparison (150) with the measured values and corresponding set values and to generate deviation data (34) describing deviations between the measured values and the corresponding set values,
particularly wherein
• the measurement facility (4) comprises a coordinate measuring machine, an articulated arm, a laser scanner, a structured light measurement device, a coating or lamination thickness measurement device, a weighing device, a hardness measuring device, a temperature measuring device, and/or a device for measuring voltage, electric current, electric resistance and/or dielectric strength;
• the production facility (1) comprises an additive manufacturing machine, a CNC machine, a pressing machine, a rolling machine, a wire and/or plate bending machine, a grinding, sanding and/or polishing machine, and/or a welding machine; and/or
• the processing means comprises at least one tool providing a 3D printing, drilling, turning, milling, cutting, honing, sanding, grinding, polishing, pressing, rolling, bending and/or welding functionality.

9. Manufacturing system according to claim 7 or claim 8,
**characterized by**
a production error predicting means (15) adapted
• to generate the actual property data by predictably calculating values of properties of an object virtually produced according to the production model (31) and according to a provided production facility model of the production facility (1),
• to perform the nominal-actual value comparison (150) with the calculated values and set values of corresponding properties of the nominal property data (30); and
• to generate deviation data (34) describing deviations between the calculated values and the corresponding set values,
particularly wherein
• the provided production facility model comprises a geometry and/or stiffness model of at least one part of the production facility (1) comprising geometric and/or stiffness data applicable for predicting production errors of an object virtually produced in the production facility (1), and/or
• the production facility (1) comprises internal measurement means (14) adapted for measuring properties of at least a part of the production facility (1), wherein the provided production facility model is based on the measured properties of the production facility (1).

10. Measurement facility (4) adapted for use with a manufacturing system according to any one of the claims 7 to 9, for measuring values of properties of at least one object (3) that is produced in a production facility (1) according to a production model (31), wherein
• the production model (31) is based on nominal property data (30) comprising a computer-aided design model, and
• the production facility (1) comprises a production control unit (11) configured to interpret the production model (31) into steering commands for the production facility (1) to produce the at least one object (3),
the measurement facility (4)
• being adapted to perform a nominal-actual value comparison (150) with the measured values and set values of corresponding properties of the nominal property data (30) of the object (3), thereby generating deviation data (34) describing deviations between the obtained values and the corresponding set values and/or deviations between the obtained values and corresponding production values of the production model (31), and
• comprising an error compensation unit (6) for compensating errors occurring in the production process of the object (3), wherein the error compensation unit (6) is adapted to automatically create (170) an adapted production model (36) based on the nominal property data (30) and on the deviation data (34) and based on information about the at least one processing means and about an adjustability of the processing means, wherein creating (170) the adapted production model (36) comprises adapting at least one set value or production value based on nominal property data (30) and deviation data (34) of the respective property of the object (3),
wherein the adapted production model (36)
• comprises at least one adapted value of at least one property of the object (3);
• is useable in an adapted production process for producing an adapted object (3') in the production assembly (10); and
• differs from the nominal property data (30),
wherein the adapted values are amended with respect to the set values or production values in such a way that an adapted object (3') produced in the production assembly (10) according to the adapted production model (36) has smaller deviations with respect to the nominal property data (30) than the at least one object (3).

11. Measurement facility (4) according to claim 10,
**characterized in that**
• the measurement facility (4) comprises a coordinate measuring machine, an articulated arm, a laser scanner, a structured light measurement device, a coating or lamination thickness measurement device, a weighing device, a hardness measuring device, a temperature measuring device, and/or a device for measuring voltage, electric current, electric resistance and/or dielectric strength; and
• the measured properties comprise linear or angular dimensions, lengths, distances, radii, diameter, position and/or orientation, curvature, thickness, volume, weight, roughness, hardness, surface quality parameters, optical, thermal and/or electrical properties.

12. Error compensation unit (6) for compensating errors in a production process of an object (3) in a production assembly (10), being adapted for use in a manufacturing system according to any one of claims 8 to 10 and/or being adapted for use with a measurement facility (4) according to claim 10 or claim 11,
wherein a production facility (1) of the production assembly (10) comprises a production control unit (11) configured to interpret a production model (31) into steering commands for the production facility (1) to produce the object (3), the production model (31) being based on nominal property data (30) comprising a computer-aided design model, the error compensation unit (6) comprising
• data obtaining means (61) adapted to obtain
▪ information about available processing means of the production assembly (10) and about an adjustability of the processing means,
▪ the nominal property data (30) of the object, and
▪ deviation data (34) that has been generated in the course of a nominal-actual value comparison (150) with obtained values of properties of actual property data of at least one sample object and set values of corresponding properties of the nominal property data (30), wherein the deviation data (34) describes deviations between obtained values of properties of actual property data of the at least one sample object and set values of corresponding properties of the nominal property data (30) and/or between the obtained values and corresponding production values of the production model (31);
• a data storage device (62) adapted to store the nominal property data (30) and the deviation data (34);
• a calculation device (64) adapted to automatically create (170) an adapted production model (36) based on the nominal property data (30) and on the deviation data (34) and based on the information about available processing means and the adjustability of the processing means, wherein creating (170) the adapted production model (36) comprises adapting at least one set value or production value based on nominal property data (30) and deviation data (34) of the respective property of the object (3); and
• data provision means (69) adapted to provide the adapted production model (36) to the production assembly (10) for an adapted production process of an adapted object (3'),
wherein the adapted production model (36) comprises at least one adapted value of at least one property of the object (3) and differs from the nominal property data (30), wherein the adapted values are amended with respect to the set values or production values in such a way that the adapted object (3') produced in the production assembly (10) according to the adapted production model (36) has smaller deviations with respect to the nominal property data (30) than the object (3).

13. Error compensation unit (6) according to claim 12, **characterized in that**
• the error compensation unit (6) comprises data output means adapted to provide the nominal property data (30), the deviation data (34), the adapted production model (36) and/or graphical representations thereof to a user; and/or
• the data obtaining means (61) and the data provision means (69) comprise a cable, means for allowing a wireless data transfer, or means for accepting a storage medium.

## Patentansprüche

1. Verfahren (100) zum Steuern eines Prozesses zur Produktion eines Objekts (3) in einer Produktionsanordnung (10) und zum Kompensieren von Fehlern, die bei dem Produktionsprozess auftreten, wobei das Verfahren Folgendes umfasst:
• Bereitstellen (110) eines Produktionsmodells (31), das auf Nominaleigenschaftsdaten (30) des Objekts (3) basiert, an eine Produktionssteuerungseinheit (11) einer Produktionseinrichtung (1) der Produktionsanordnung (10), wobei
▪ die Nominaleigenschaftsdaten (30) ein Modell auf Basis computerunterstützter Konstruktion umfassen, und
▪ die Produktionssteuerungseinheit (11) das Produktionsmodell (31) in Steuerbefehle für die Produktionseinrichtung (1) interpretiert, um ein oder mehrere Objekte (3) zu produzieren (120);
• Generieren von Realeigenschaftsdaten, umfassend erhaltene Werte von Eigenschaften von wenigstens einem Musterobjekt, das in der Produktionsanordnung (10) gemäß dem Produktionsmodell (31) produziert wurde;
• Durchführen eines Nominal-Realwert-Vergleichs (150) mit den erhaltenen Eigenschaftswerten der Realeigenschaftsdaten und Sollwerten entsprechender Eigenschaften der Nominaleigenschaftsdaten (30) des Objekts (3), wodurch Abweichungsdaten (34) generiert werden, die Abweichungen zwischen den erhaltenen Werten und den entsprechenden Sollwerten und/oder Abweichungen zwischen den erhaltenen Werten und entsprechenden Produktionswerten des Produktionsmodells (31) beschreiben; und
• automatisches Erstellen (170) eines adaptierten Produktionsmodells (36) basierend auf den Nominaleigenschaftsdaten (30) und auf den Abweichungsdaten (34) und basierend auf Informationen über verfügbare Verarbeitungsmittel der Produktionsanordnung (10) und über eine Einstellbarkeit der Verarbeitungsmittel,
wobei das Erstellen (170) des adaptierten Produktionsmodells (36) das Adaptieren wenigstens eines Sollwerts oder Produktionswerts basierend auf Nominaleigenschaftsdaten (30) und Abweichungsdaten (34) der jeweiligen Eigenschaft des Objekts (3) umfasst, wobei das adaptierte Produktionsmodell (36)
• wenigstens einen adaptierten Wert wenigstens einer Eigenschaft des Objekts (3) umfasst;
• in einem adaptierten Produktionsprozess zum Produzieren eines adaptierten Objekts (3') in der Produktionsanordnung (10) verwendbar ist; und
• sich von den Nominaleigenschaftsdaten (30) unterscheidet,
wobei die adaptierten Werte in Bezug auf die Sollwerte oder Produktionswerte derart abgeändert werden, dass das adaptierte Objekt (3'), das in der Produktionsanordnung (10) gemäß dem adaptierten Produktionsmodell (36) produziert wird, kleinere Abweichungen in Bezug auf die Nominaleigenschaftsdaten (30) aufweist als das Objekt (3).

2. Verfahren (100) nach Anspruch 1,
**dadurch gekennzeichnet, dass**
das Generieren der Realeigenschaftsdaten das Messen (140) von Eigenschaften des wenigstens einen Musterobjekts, das in der Produktionsanordnung (10) gemäß dem Produktionsmodell (30) produziert wurde, in einer Messeinrichtung (4) umfasst.

3. Verfahren (100) nach Anspruch 1,
**dadurch gekennzeichnet, dass**
das Generieren der Realeigenschaftsdaten das voraussagbare Berechnen von Eigenschaften eines Objekts umfasst, das in der Produktionsanordnung (10) gemäß dem Produktionsmodell (30) und gemäß einem bereitgestellten Produktionseinrichtungsmodell virtuell produziert wird.

4. Verfahren (100) nach einem der vorhergehenden Ansprüche,
**dadurch gekennzeichnet, dass**
die Nominaleigenschaftsdaten (30) Schwellenwerte für die Sollwerte umfassen, wobei jeder Schwellenwert eine maximal zulässige Abweichung von dem jeweiligen Sollwert beschreibt,
wobei der wenigstens eine adaptierte Wert von dem jeweiligen Sollwert derart abweicht, dass eine Abweichung zwischen dem Sollwert und dem entsprechenden erhaltenen Wert wenigstens teilweise kompensiert wird, wenn das adaptierte Objekt (3') produziert wird.

5. Verfahren (100) nach einem der vorhergehenden Ansprüche,
**dadurch gekennzeichnet, dass**
das Erstellen (170) des adaptierten Produktionsmodells (36) auf dem Produktionsmodell (31) basiert, wobei das Produktionsmodell (31) in Bezug auf die Nominaleigenschaftsdaten (30) abgeändert wird, wobei die Abänderung auf Informationen über bekannte systematische Fehler der Produktionsanordnung (10) basiert.

6. Verfahren (100) nach einem der vorhergehenden Ansprüche,
**gekennzeichnet durch**
• das Bereitstellen des adaptierten Produktionsmodells (36) an die Produktionsanordnung (10);
• das Produzieren eines oder mehrerer adaptierter Objekte (3') in der Produktionsanordnung (10) basierend auf dem adaptierten Produktionsmodell (36);
• das Generieren von adaptierten Realeigenschaftsdaten, die Werte von Eigenschaften wenigstens eines adaptierten Musterobjekts umfassen, das in der Produktionsanordnung (10) gemäß dem adaptierten Produktionsmodell (36) produziert wird;
• das Durchführen eines Nominal-Realwert-Vergleichs (150) mit den Eigenschaftswerten der adaptierten Realeigenschaftsdaten und Sollwerten entsprechender Eigenschaften der Nominaleigenschaftsdaten (30), wodurch adaptierte Abweichungsdaten generiert werden, wobei insbesondere Abweichungen beschrieben werden
▪ zwischen den Werten der adaptierten Realeigenschaftsdaten und den Sollwerten und/oder
▪ zwischen den Werten der adaptierten Realeigenschaftsdaten und entsprechenden adaptierten Produktionswerten des adaptierten Produktionsmodells (36); und
• das automatische Erstellen (170) eines weiteren adaptierten Produktionsmodells (36') basierend auf den Nominaleigenschaftsdaten (30) und auf den adaptierten Abweichungsdaten.

7. Selbstkompensierendes Fertigungssystem, das dafür eingerichtet ist, wenigstens ein Objekt (3) in einer Produktionsanordnung (10) zu produzieren, wobei die Produktionsanordnung (10) Folgendes umfasst:
• eine Produktionseinrichtung (1), die wenigstens ein Verarbeitungsmittel aufweist und dafür eingerichtet ist, das Objekt (3) zu produzieren,
• eine Produktionssteuerungseinheit (11), die Mittel zum Speichern und/oder Erhalten eines Produktionsmodells (31) aufweist und dafür eingerichtet ist, einen Produktionsprozess der Produktionseinrichtung (1) basierend auf dem Produktionsmodell (31) zu steuern, und
• eine Fehlerkompensationseinheit (6) zum Kompensieren von Fehlern bei dem Prozess zur Produktion eines Objekts (3),
wobei die Produktionssteuerungseinheit (11) dafür ausgelegt ist, das Produktionsmodell (31), das auf Nominaleigenschaftsdaten (30) des Objekts (3) basiert, in Steuerbefehle für die Produktionseinrichtung (1) zu interpretieren, um ein oder mehrere Objekte (3) zu produzieren, wobei die Nominaleigenschaftsdaten (30) ein Modell auf Basis computerunterstützter Konstruktion umfassen, wobei die Fehlerkompensationseinheit (6) dafür eingerichtet ist,
• die Nominaleigenschaftsdaten (30) des Objekts (3) und Abweichungsdaten (34) zu erhalten, die bei einem Nominal-Realwert-Vergleich (150) mit erhaltenen Eigenschaftswerten von Realeigenschaftsdaten wenigstens eines Musterobjekts und Sollwerten entsprechender Eigenschaften der Nominaleigenschaftsdaten (30) generiert wurden, wobei die Abweichungsdaten (34) Abweichungen zwischen den erhaltenen Werten und den entsprechenden Sollwerten und/oder Abweichungen zwischen den erhaltenen Werten und entsprechenden Produktionswerten des Produktionsmodells (31) beschreiben;
• basierend auf den Nominaleigenschaftsdaten (30) und auf den Abweichungsdaten (34) und basierend auf Informationen über das wenigstens eine Verarbeitungsmittel und über eine Einstellbarkeit des Verarbeitungsmittels automatisch ein adaptiertes Produktionsmodell (36) zu erstellen (170), wobei das Erstellen (170) des adaptierten Produktionsmodells (36) das Adaptieren wenigstens eines Sollwerts oder Produktionswerts basierend auf Nominaleigenschaftsdaten (30) und Abweichungsdaten (34) der jeweiligen Eigenschaft des Objekts (3) umfasst; und
• das adaptierte Produktionsmodell (36) für einen adaptierten Prozess zur Produktion eines adaptierten Objekts (3') an die Produktionssteuerungseinheit (11) bereitzustellen,
wobei das adaptierte Produktionsmodell (36) wenigstens einen adaptierten Wert wenigstens einer Eigenschaft des Objekts (3) umfasst, wobei die adaptierten Werte in Bezug auf die Sollwerte oder Produktionswerte derart abgeändert sind, dass das adaptierte Objekt (3'), das in der Produktionsanordnung (10) gemäß dem adaptierten Produktionsmodell (36) produziert wird, kleinere Abweichungen in Bezug auf die Nominaleigenschaftsdaten (30) aufweist als das Objekt (3).

8. Fertigungssystem nach Anspruch 7,
**gekennzeichnet durch**
• eine Messeinrichtung (4), die dafür eingerichtet ist, die Realeigenschaftsdaten zu generieren, indem Werte von Eigenschaften des wenigstens einen Musterobjekts gemessen werden, das in der Produktionsanordnung (10) gemäß dem Produktionsmodell (31) produziert wurde; und
• eine Qualitätssicherungseinrichtung (5), die dafür eingerichtet ist, den Nominal-Realwert-Vergleich (150) mit den Messwerten und entsprechenden Sollwerten durchzuführen und Abweichungsdaten (34) zu generieren, die Abweichungen zwischen den Messwerten und den entsprechenden Sollwerten beschreiben,
wobei insbesondere
• die Messeinrichtung (4) eine Koordinatenmessmaschine, einen Gelenkarm, einen Laserscanner, eine Messvorrichtung für strukturiertes Licht, eine Vorrichtung zur Messung der Dicke einer Beschichtung oder Laminierung, eine Wiegevorrichtung, eine Härtemessvorrichtung, eine Temperaturmessvorrichtung und/oder eine Vorrichtung zur Messung der Spannung, des elektrischen Stroms, des elektrischen Widerstands und/oder der Durchschlagsfestigkeit umfasst;
• die Produktionseinrichtung (1) eine Vorrichtung zur additiven Fertigung, eine CNC-Maschine, eine Pressmaschine, eine Walzmaschine, eine Draht- und/oder Plattenbiegemaschine, eine Schleif-, Schmirgelschleif- und/oder Poliermaschine und/oder eine Schweißmaschine umfasst; und/oder
• das Verarbeitungsmittel wenigstens ein Werkzeug umfasst, das eine 3D-Druck-, Bohr-, Dreh-, Fräs-, Schneid-, Ziehschleif-, Schmirgelschleif-, Schleif-, Polier-, Press-, Walz-, Biege- und/oder Schweißfunktionalität bereitstellt.

9. Fertigungssystem nach Anspruch 7 oder Anspruch 8,
**gekennzeichnet durch**
ein Produktionsfehler-Vorhersagemittel (15), das dafür eingerichtet ist,
• die Realeigenschaftsdaten zu generieren, indem auf voraussagbare Weise Werte von Eigenschaften eines Objekts berechnet werden, das gemäß dem Produktionsmodell (31) und gemäß einem bereitgestellten Produktionseinrichtungsmodell der Produktionseinrichtung (1) virtuell produziert wird,
• den Nominal-Realwert-Vergleich (150) mit den berechneten Werten und den Sollwerten entsprechender Eigenschaften der Nominaleigenschaftsdaten (30) durchzuführen; und
• Abweichungsdaten (34) zu generieren, die Abweichungen zwischen den berechneten Werten und den entsprechenden Sollwerten beschreiben,
wobei insbesondere
• das bereitgestellte Produktionseinrichtungsmodell ein Geometrie- und/oder Steifigkeitsmodell wenigstens eines Teils der Produktionseinrichtung (1) umfasst, das Geometrie- und/oder Steifigkeitsdaten umfasst, die dafür anwendbar sind, Produktionsfehler eines Objekts vorauszusagen, das in der Produktionseinrichtung (1) virtuell produziert wird, und/oder
• die Produktionseinrichtung (1) interne Messmittel (14) umfasst, die dafür eingerichtet sind, Eigenschaften wenigstens eines Teils der Produktionseinrichtung (1) zu messen, wobei das bereitgestellte Produktionseinrichtungsmodell auf den gemessenen Eigenschaften der Produktionseinrichtung (1) basiert.

10. Messeinrichtung (4), die zur Verwendung mit einem Fertigungssystem nach einem der Ansprüche 7 bis 9 eingerichtet ist, um Werte von Eigenschaften wenigstens eines Objekts (3) zu messen, das in einer Produktionseinrichtung (1) gemäß einem Produktionsmodell (31) produziert wird, wobei
• das Produktionsmodell (31) auf Nominaleigenschaftsdaten (30) basiert, die ein Modell auf Basis computerunterstützter Konstruktion umfassen, und
• die Produktionseinrichtung (1) eine Produktionssteuerungseinheit (11) umfasst, die dafür ausgelegt ist, das Produktionsmodell (31) in Steuerbefehle für die Produktionseinrichtung (1) zu interpretieren, um das wenigstens eine Objekt (3) zu produzieren,
wobei die Messeinrichtung (4)
• dafür eingerichtet ist, einen Nominal-Realwert-Vergleich (150) mit den Messwerten und den Sollwerten entsprechender Eigenschaften der Nominaleigenschaftsdaten (30) des Objekts (3) durchzuführen, wodurch Abweichungsdaten (34) generiert werden, die Abweichungen zwischen den erhaltenen Werten und den entsprechenden Sollwerten und/oder Abweichungen zwischen den erhaltenen Werten und entsprechenden Produktionswerten des Produktionsmodells (31) beschreiben, und
• eine Fehlerkompensationseinheit (6) zum Kompensieren von Fehlern umfasst, die bei dem Prozess zur Produktion des Objekts (3) auftreten, wobei die Fehlerkompensationseinheit (6) dafür eingerichtet ist, basierend auf den Nominaleigenschaftsdaten (30) und auf den Abweichungsdaten (34) und basierend auf Informationen über das wenigstens eine Verarbeitungsmittel und über eine Einstellbarkeit der Verarbeitungsmittel automatisch ein adaptiertes Produktionsmodell (36) zu erzeugen (170), wobei das Erzeugen (170) des adaptierten Produktionsmodells (36) das Adaptieren wenigstens eines Sollwerts oder Produktionswerts basierend auf Nominaleigenschaftsdaten (30) und Abweichungsdaten (34) der jeweiligen Eigenschaft des Objekts (3) umfasst,
wobei das adaptierte Produktionsmodell (36)
• wenigstens einen adaptierten Wert wenigstens einer Eigenschaft des Objekts (3) umfasst;
• in einem adaptierten Produktionsprozess zum Produzieren eines adaptierten Objekts (3') in der Produktionsanordnung (10) verwendbar ist; und
• sich von den Nominaleigenschaftsdaten (30) unterscheidet,
wobei die adaptierten Werte in Bezug auf die Sollwerte oder die Produktionswerte derart abgeändert sind, dass ein adaptiertes Objekt (3'), das in der Produktionsanordnung (10) gemäß dem adaptierten Produktionsmodell (36) produziert wird, geringere Abweichungen in Bezug auf die Nominaleigenschaftsdaten (30) als das wenigstens eine Objekt (3) aufweist.

11. Messeinrichtung (4) nach Anspruch 10,
**dadurch gekennzeichnet, dass**
• die Messeinrichtung (4) eine Koordinatenmessmaschine, einen Gelenkarm, einen Laserscanner, eine Messvorrichtung für strukturiertes Licht, eine Vorrichtung zur Messung der Dicke einer Beschichtung oder Laminierung, eine Wiegevorrichtung, eine Härtemessvorrichtung, eine Temperaturmessvorrichtung und/oder eine Vorrichtung zur Messung der Spannung, des elektrischen Stroms, des elektrischen Widerstands und/oder der Durchschlagsfestigkeit umfasst; und
• die gemessenen Eigenschaften lineare oder winkelmäßige Abmessungen, Längen, Abstände, Radien, Durchmesser, Position und/oder Ausrichtung, Krümmung, Dicke, Volumen, Gewicht, Rauigkeit, Härte, Oberflächenqualitätsparameter, optische, thermische und/oder elektrische Eigenschaften umfassen.

12. Fehlerkompensationseinheit (6) zum Kompensieren von Fehlern in einem Prozess zur Produktion eines Objekts (3) in einer Produktionsanordnung (10), die dafür eingerichtet ist, in einem Fertigungssystem nach einem der Ansprüche 8 bis 10 verwendet zu werden, und/oder die dafür eingerichtet ist, mit einer Messeinrichtung (4) nach Anspruch 10 oder Anspruch 11 verwendet zu werden,
wobei eine Produktionseinrichtung (1) der Produktionsanordnung (10) eine Produktionssteuerungseinheit (11) umfasst, die dafür ausgelegt ist, ein Produktionsmodell (31) in Steuerbefehle für die Produktionseinrichtung (1) zu interpretieren, um das Objekt (3) zu produzieren, wobei das Produktionsmodell (31) auf Nominaleigenschaftsdaten (30) basiert, die ein Modell auf Basis computerunterstützter Konstruktion umfassen, wobei die Fehlerkompensationseinheit (6) Folgendes umfasst:
• Datenerfassungsmittel (61), die dafür eingerichtet sind, Folgendes zu erhalten:
▪ Informationen über verfügbare Verarbeitungsmittel der Produktionsanordnung (10) und über eine Einstellbarkeit der Verarbeitungsmittel,
▪ die Nominaleigenschaftsdaten (30) des Objekts, und
▪ Abweichungsdaten (34), die im Lauf eines Nominal-Realwert-Vergleichs (150) mit erhaltenen Werten von Eigenschaften von Realeigenschaftsdaten wenigstens eines Musterobjekts und Sollwerten entsprechender Eigenschaften der Nominaleigenschaftsdaten (30) generiert wurden, wobei die Abweichungsdaten (34) Abweichungen zwischen erhaltenen Werten von Eigenschaften von Realeigenschaftsdaten des wenigstens einen Musterobjekts und Sollwerten entsprechender Eigenschaften der Nominaleigenschaftsdaten (30) und/oder zwischen den erhaltenen Werten und entsprechenden Produktionswerten des Produktionsmodells (31) beschreiben;
• eine Datenspeicherungsvorrichtung (62), die dafür eingerichtet ist, die Nominaleigenschaftsdaten (30) und die Abweichungsdaten (34) zu speichern;
• eine Rechenvorrichtung (64), die dafür eingerichtet ist, basierend auf den Nominaleigenschaftsdaten (30) und auf den Abweichungsdaten (34) und basierend auf den Informationen über verfügbare Verarbeitungsmittel und die Einstellbarkeit der Verarbeitungsmittel automatisch ein adaptiertes Produktionsmodell (36) zu erzeugen (170), wobei das Erzeugen (170) des adaptierten Produktionsmodells (36) das Adaptieren wenigstens eines Sollwerts oder Produktionswerts basierend auf Nominaleigenschaftsdaten (30) und Abweichungsdaten (34) der jeweiligen Eigenschaft des Objekts (3) umfasst; und
• Datenbereitstellungsmittel (69), die dafür eingerichtet sind, das adaptierte Produktionsmodell (36) an die Produktionsanordnung (10) für einen adaptierten Prozess zur Produktion eines adaptierten Objekts (3') bereitzustellen,
wobei das adaptierte Produktionsmodell (36) wenigstens einen adaptierten Wert wenigstens einer Eigenschaft des Objekts (3) umfasst und sich von den Nominaleigenschaftsdaten (30) unterscheidet, wobei die adaptierten Werte in Bezug auf die Sollwerte oder Produktionswerte derart abgeändert sind, dass das adaptierte Objekt (3'), das in der Produktionsanordnung (10) gemäß dem adaptierten Produktionsmodell (36) produziert wird, geringere Abweichungen in Bezug auf die Nominaleigenschaftsdaten (30) als das Objekt (3) aufweist.

13. Fehlerkompensationseinheit (6) nach Anspruch 12,
**dadurch gekennzeichnet, dass**
• die Fehlerkompensationseinheit (6) Datenausgabemittel umfasst, die dafür eingerichtet sind, die Nominaleigenschaftsdaten (30), die Abweichungsdaten (34), das adaptierte Produktionsmodell (36) und/oder graphische Darstellungen davon an einen Benutzer bereitzustellen; und/oder
• die Datenerfassungsmittel (61) und die Datenbereitstellungsmittel (69) ein Kabel, Mittel zum Ermöglichen einer drahtlosen Datenübertragung oder Mittel zum Aufnehmen eines Speichermediums umfassen.

## Revendications

1. Procédé (100) pour contrôler un processus de production d'un objet (3) dans un montage de production (10) et pour compenser des erreurs qui interviennent dans le processus de production, le procédé comprenant :
• la fourniture (110) d'un modèle de production (31) qui est basé sur des données nominales de propriétés (30) de l'objet (3) à une unité de contrôle de la production (11) d'une chaîne de production (1) du montage de production (10), cependant que
▪ les données nominales de propriétés (30) comprennent un modèle de conception assisté par ordinateur et
▪ l'unité de contrôle de la production (11) interprète le modèle de production (31) en commandes de pilotage pour la chaîne de production (1) pour produire un ou plusieurs objets (3),
• la génération de données actuelles de propriétés qui comprennent des valeurs obtenues des propriétés d'au moins un objet échantillon produit dans le montage de production (10) selon le modèle de production (31),
• l'exécution d'une comparaison de valeurs nominales/actuelles (150) avec les valeurs obtenues des propriétés des données actuelles de propriétés et des valeurs fixées de propriétés correspondantes des données nominales de propriétés (30) de l'objet (3) en générant des données d'écart (34) qui décrivent des écarts entre les valeurs obtenues et les valeurs fixées et/ou les écarts correspondants entre les valeurs obtenues et les valeurs de production correspondantes du modèle de production (31) et
• la création automatique (170) d'un modèle de production adapté (36) basé sur les données nominales de propriétés (30) et sur les données d'écart (34) et basé sur des informations sur des moyens de traitement disponibles du montage de production (10) et sur le caractère ajustable des moyens de traitement,
cependant que la création (170) du modèle de production adapté (36) comprend l'adaptation d'au moins une valeur fixée ou d'une valeur de production basée sur les données nominales de propriétés (30) et sur les données d'écart (34) de la propriété respective de l'objet (3), cependant que le modèle de production adapté (36)
• comprend au moins une valeur adaptée d'au moins une propriété de l'objet (3),
• est utilisable dans un processus de production adapté pour produire un objet adapté (3') dans le montage de production (10) et
• diffère des données nominales de propriétés (30),
cependant que les valeurs adaptées sont modifiées par rapport aux valeurs fixées ou aux valeurs de production de telle manière que l'objet adapté (3') produit dans le montage de production selon le modèle de production adapté (36) a de plus petits écarts par rapport aux données nominales de propriétés (30) que l'objet (3).

2. Procédé (100) selon la revendication 1, **caractérisé en ce que** la génération de données actuelles de propriétés comprend la mesure (140) dans une installation de mesure (4) de propriétés du au moins un objet échantillon qui a été produit dans le montage de production (10) selon le modèle de production (30).

3. Procédé (100) selon la revendication 1, **caractérisé en ce que** la génération de données actuelles de propriétés comprend le calcul prévisible de propriétés d'un objet produit virtuellement dans le montage de production (10) selon le modèle de production (30) et selon un modèle prévu de la chaîne de production.

4. Procédé (100) selon l'une quelconque des revendications précédentes, **caractérisé en ce que** les données nominales de propriétés (30) comprennent des valeurs de seuil pour les valeurs fixées, chaque valeur de seuil décrivant un écart maximum admissible de la valeur fixée respective, cependant que la au moins une valeur adaptée dévie de la valeur fixée respective de telle manière qu'un écart entre la valeur fixée et la valeur obtenue correspondante est au moins partiellement compensée lors de la production de l'objet adapté (3').

5. Procédé (100) selon l'une quelconque des revendications précédentes, **caractérisé en ce que** la création (170) du modèle de production adapté (36) est basée sur le modèle de production (31), cependant que le modèle de production (31) est modifié par rapport aux données nominales de propriétés (30), cependant que la modification est basée sur des informations sur des erreurs systématiques connues du montage de production (10).

6. Procédé (100) selon l'une quelconque des revendications précédentes, **caractérisé par** :
• la fourniture du modèle de production adapté (36) au montage de production (10) ;
• la production d'un ou de plusieurs objets adaptés (3') dans le montage de production (10) basé sur le modèle de production adapté (36) ;
• la génération de données actuelles de propriétés adaptées comprenant des valeurs de propriétés d'au moins un objet échantillon adapté produit dans le montage de production (10) selon le modèle de production adapté (36) ;
• l'exécution d'une comparaison de valeurs nominales/actuelles (150) avec les valeurs de propriétés des données actuelles de propriétés adaptées et des valeurs fixées de propriétés correspondantes des données nominales de propriétés (30) en générant ainsi des données d'écart adaptées, en particulier des écarts descriptifs
▪ entre les valeurs des données actuelles de propriétés adaptées et les valeurs fixées et/ou
▪ entre les valeurs des données actuelles de propriétés adaptées et des valeurs de production adaptées correspondantes du modèle de production adapté (36) et
• la création automatique (170) d'un autre modèle de production adapté (36') basé sur les données nominales de propriétés (30) et sur les données d'écart adaptées.

7. Système de fabrication d'auto-compensation adapté pour produire au moins un objet (3) dans un montage de production (10), le montage de production (10) comprenant :
• une chaîne de production (1) qui a au moins un moyen de traitement et qui est adaptée pour produire l'objet (3),
• une unité de contrôle de la production (11) qui a des moyens pour stocker et/ou pour obtenir un modèle de production (31) et qui est adaptée pour contrôler un processus de production de la chaîne de production (1) sur la base du modèle de production (31) et
• une unité de compensation d'erreurs (6) pour compenser des erreurs dans le processus de production d'un objet (3),
cependant que l'unité de contrôle de la production (11) est configurée pour interpréter le modèle de production (31) qui est basé sur des données de production nominales (30) de l'objet en commandes de pilotage pour la chaîne de production (1) pour produire un ou plusieurs objets (3), les données nominales de propriétés (30) comprenant un modèle de conception assisté par ordinateur, l'unité de compensation d'erreurs (6) étant adaptée
• pour obtenir les données nominales de propriétés (30) de l'objet (3) et des données d'écart (34) qui ont été générées au cours d'une comparaison de valeurs nominales/actuelles (150) avec des valeurs obtenues de propriétés de données actuelles de propriétés d'au moins un objet échantillon et de valeurs fixées de propriétés correspondantes des données nominales de propriétés (30), les données d'écart (34) décrivant des écarts entre les valeurs obtenues et les valeurs fixées correspondantes et/ou des écarts entre les valeurs obtenues et des valeurs de production correspondantes du modèle de production (31) ;
• pour créer automatiquement (170) un modèle de production adapté (36) sur la base des données nominales de propriétés (30 et sur les données d'écart (34) et sur la base d'informations sur le au moins un moyen de traitement et sur une adaptabilité du moyen de traitement, la création (170) du modèle de production adapté (36) comprenant l'adaptation d'au moins une valeur fixée ou une valeur de production sur la base des données nominales de propriétés (30) et des données d'écart (34) de la propriété respective de l'objet (3) et
• pour fournir le modèle de production adapté (36) à l'unité de contrôle de la production (36) pour un processus de production adapté d'un objet adapté (3'),
cependant que le modèle de production adapté (36) comprend au moins une valeur adaptée d'au moins une propriété de l'objet (3), cependant que les valeurs adaptées sont modifiées par rapport aux valeurs fixées ou aux valeurs de production de telle manière que l'objet adapté (3') produit dans le montage de production (10) selon le modèle de production adapté (36) a de plus petits écarts par rapport aux données nominales de propriétés (30) que l'objet (3).

8. Système de fabrication selon la revendication 7, **caractérisé par**
• une installation de mesure (4) qui est adaptée pour générer les données actuelles de propriétés par des valeurs de mesure de propriétés d'au moins un objet échantillon qui a été produit dans le montage de production (10) selon le modèle de production (31) et
• une installation d'assurance qualité (5) qui est adaptée pour réaliser la comparaison de valeurs nominales/actuelles (150) avec les valeurs mesurées et des valeurs fixées correspondantes et pour générer des données d'écart (34) qui décrivent des écarts entre les valeurs mesurées et les valeurs fixées correspondantes
en particulier cependant que
• l'installation de mesure (4) comprend une machine de mesure de coordonnées, un bras articulé, un scanner laser, un dispositif de mesure de lumière structurée, un dispositif de mesure de l'épaisseur du revêtement ou du laminage, un dispositif de pesée, un dispositif de mesure de la dureté, un dispositif de mesure de la température et/ou un dispositif de mesure de la tension, du courant électrique, de la résistance électrique et/ou de la rigidité diélectrique ;
• l'installation de production (1) comprend une machine de fabrication additive, une machine CNC, une presse, une machine pour enrouler, une machine de cintrage de fil et/ou de pliage de tôle, une ponceuse, une machine de sablage/ou une polisseuse et/ou une soudeuse et/ou
• le moyen de traitement comprend au moins un outil qui fournit une fonctionnalité d'impression 3D, de perçage, de tournage, de fraisage, de coupage, d'affûtage, de sablage, de polissage, de presse, d'enroulement, de cintrage et/ou de soudage.

9. Système de fabrication selon la revendication 7 ou 8, **caractérisé par** un moyen de prédiction des erreurs de production (15) adapté
• pour générer les données de propriété actuelles en calculant de manière prévisible des valeurs de propriétés d'un objet produit virtuellement selon le modèle de production (31) et selon un modèle de chaîne de production fourni de la chaîne de production (1),
• pour réaliser la comparaison des valeurs nominales/actuelles (150) avec les valeurs calculées et des valeurs fixées de propriétés correspondantes des données nominales de propriétés (30) et
• pour générer des données d'écart (34) qui décrivent des écarts entre les valeurs calculées et les valeurs fixées correspondantes
en particulier cependant que
• le modèle de chaîne de production prévu comprend un modèle de géométrie et/ou de rigidité d'au moins une partie de la chaîne de production (1) qui comprend des données géométriques et/ou de rigidité applicables pour prédire des erreurs de production d'un objet produit virtuellement dans la chaîne de production (1) et/ou
• la chaîne de production (1) comprend un moyen de mesure interne (14) adapté pour mesurer des propriétés d'au moins une partie de la chaîne de production (1), cependant que le modèle de chaîne de production prévu est basé sur les propriétés mesurées de la chaîne de production (1).

10. Installation de mesure (4) adaptée pour l'utilisation avec un système de fabrication selon l'une quelconque des revendications 7 à 9 pour mesurer des valeurs de propriétés d'au moins un objet (3) qui est produit dans une chaîne de production (1) selon un modèle de production (31), cependant que
• le modèle de production (31) est basé sur des données nominales de propriétés (30) comprenant modèle de conception assisté par ordinateur et
• la chaîne de production (1) comprend une unité de contrôle de la production (11) configurée pour interpréter le modèle de production (31) en commandes de pilotage pour la chaîne de production (1) pour produire le au moins un objet (3),
l'installation de mesure (4)
• étant adaptée pour réaliser une comparaison des valeurs nominales/actuelles (150) avec les valeurs mesurées et des valeurs fixées de propriétés correspondantes des données nominales de propriétés (30) de l'objet (3) en générant des données d'écart (34) qui décrivent des écarts entre les valeurs obtenues et les valeurs fixées correspondantes et/ou des écarts entre les valeurs obtenues et les valeurs de production correspondantes du modèle de production (31) et
• comprenant une unité de compensation d'erreurs (6) pour compenser des erreurs qui interviennent dans le processus de production de l'objet (3), cependant que l'unité de compensation d'erreurs (6) est adaptée pour créer automatiquement (170) un modèle de production adapté (36) sur la base des données nominales de propriétés (30 et sur les données d'écart (34) et sur la base d'informations sur le au moins un moyen de traitement et sur une adaptabilité du moyen de traitement, la création (170) du modèle de production adapté (36) comprenant l'adaptation d'au moins une valeur fixée ou valeur de de production sur la base des données nominales de propriétés (30) et des données d'écart (34) de la propriété respective de l'objet (3), cependant que le modèle de production adapté (36)
• comprend au moins une valeur adaptée d'au moins une propriété de l'objet (3),
• peut être utilisé dans un processus de production adapté pour produire un objet adapté (3') dans le montage de production (10) et
• diffère des données nominales de propriétés (30),
cependant que les valeurs adaptées sont modifiées par rapport aux valeurs fixées ou aux valeurs de production de telle manière que l'objet adapté (3') produit dans le montage de production (10) selon le modèle de production adapté (36) a de plus petits écarts par rapport aux données nominales de propriétés (30) que le au moins un objet (3).

11. Installation de mesure (4) selon la revendication 10, **caractérisée en ce que**
• l'installation de mesure (4) comprend une machine de mesure de coordonnées, un bras articulé, un scanner laser, un dispositif de mesure de lumière structurée, un dispositif de mesure de l'épaisseur du revêtement ou du laminage, un dispositif de pesée, un dispositif de mesure de la dureté, un dispositif de mesure de la température et/ou un dispositif de mesure de la tension, du courant électrique, de la résistance électrique et/ou de la rigidité diélectrique et
• les propriétés mesurées comprennent des dimensions linéaires ou angulaires, des longueurs, des distances, des rayons, des diamètres, la position et/ou l'orientation, la courbure, l'épaisseur, le volume, le poids, la rugosité, la dureté, des paramètres de qualité de surface, des propriétés optiques, thermiques et/ou électriques.

12. Unité de compensation d'erreurs (6) pour compenser des erreurs dans un processus de production d'un objet (3) dans un montage de production (10), adaptée pour l'utilisation dans un système de fabrication selon l'une quelconque des revendications 8 à 10 et/ou adaptée pour l'utilisation avec une installation de mesure (4) selon la revendication 10 ou 11,
cependant qu'une chaîne de production (1) du montage de production (10) comprend une unité de contrôle de la production (11) configurée pour interpréter un modèle de production (31) en commandes de pilotage pour la chaîne de production (1) pour produire l'objet (3), le modèle de production (31) étant basé sur des données nominales de propriétés (30) comprenant un modèle de conception assisté par ordinateur, l'unité de compensation d'erreurs (6) comprenant
▪ des moyens d'obtention de données (61) adaptés pour obtenir
▪ des informations sur des moyens de traitement disponibles du montage de production (10) et sur une adaptabilité du moyen de traitement,
▪ les données nominales de propriétés (30) de l'objet et
▪ des données d'écart (34) qui ont été générées au cours d'une comparaison de valeurs nominales/actuelles (150) avec des valeurs obtenues de propriétés de données actuelles de propriétés d'au moins un objet échantillon et des valeurs fixées de propriétés correspondantes des données nominales de propriétés (30), les données d'écart (34) décrivant des écarts entre des valeurs obtenues de propriétés de données actuelles de propriétés d'au moins un objet échantillon et des valeurs fixées de propriétés correspondantes des données nominales de propriétés (30) et/ou entre les valeurs obtenues et des valeurs de production correspondantes du modèle de production (31) ;
• un dispositif de stockage de données (62) adapté pour stocker les données nominales de propriétés (30) et les données d'écart (34) ;
• un dispositif de calcul (64) adapté pour créer automatiquement (170) un modèle de production adapté (36) sur la base des données nominales de propriétés (30 et sur les données d'écart (34) et sur la base d'informations sur le moyen de traitement disponible et sur l'adaptabilité du moyen de traitement, la création (170) du modèle de production adapté (36) comprenant l'adaptation d'au moins une valeur fixée ou valeur de de production sur la base des données nominales de propriétés (30) et des données d'écart (34) de la propriété respective de l'objet (3) et
• un moyen de fourniture de données (69) adapté pour fournir le modèle de production adapté (36) à l'unité de contrôle de la production (36) pour un processus de production adapté d'un objet adapté (3'),
cependant que le modèle de production adapté (36) comprend au moins une valeur adaptée d'au moins une propriété de l'objet (3) et diffère des données de propriété nominales (30), cependant que les valeurs adaptées sont modifiées par rapport aux valeurs fixées ou aux valeurs de production de telle manière que l'objet adapté (3') produit dans le montage de production (10) selon le modèle de production adapté (36) a de plus petits écarts par rapport aux données nominales de propriétés (30) que l'objet (3).

13. Unité de compensation d'erreurs (6) selon la revendication 12, **caractérisée en ce que**
• l'unité de compensation d'erreurs (6) comprend un moyen de sortie de données adapté pour fournir les données nominales de propriétés (30), les données d'écart (34), le modèle de production adapté (36) et/ou des représentations graphiques de celui-ci à un utilisateur et/ou
• le moyen d'obtention de données (61) et le moyen de fourniture de données (69) comprennent un câble, un moyen pour permettre un transfert de données sans fil ou un moyen pour accepter un moyen de stockage.
